# EUROPÄISCHE PATENTANMELDUNG

(11) **EP 2 826 711 A1**
(43) Veröffentlichungstag der Anmeldung: **21.01.2015**
(21) Anmeldenummer: 14173654.6
(22) Anmeldetag: 24.06.2014
(51) Int. Cl.: B64C 29/00, B64C 39/02

(54) **Fluggerät zum Befördern von einem oder mehreren Aufnahmegeräten durch die Luft**

(30) Priorität: 18.07.2013 DE 102013107654
(71) Anmelder: OIC-GmbH, 42855 Remscheid (DE)
(72) Erfinder: Reichert, Robert Heinrich Kurt, 42857 Remscheid (DE)
(74) Vertreter: Buse, Mentzel, Ludewig Patentanwaltskanzlei

(57) **Zusammenfassung**

Die Erfindung betrifft ein Fluggerät (10) zum Befördern von einem oder mehreren Aufnahmegeräten, durch die Luft. Hierzu weist das Fluggerät (10) einen oder mehrere Rotoren (11) auf, welche die Flugbewegung steuern sowie eine Halterung (12) für das Aufnahmegerät. Des Weiteren ist ein Gerüst (13) vorgesehen, an welchem alle Elemente direkt oder indirekt anbringbar sind. Die Erfindung schlägt nun vor, dass das Gerüst (13) einen Korpus (20) mit wenigstens vier nach innen (24) gebogenen Armen (21) umfasst, an deren Enden (22) je wenigstens ein Rotor (11) angeordnet ist. Weiterhin ist eine Brücke (30) vorgesehen, die an ihrem ersten Ende (31) eine Halterung (12) für das Aufnahmegerät umfasst, wobei an ihrem zweiten Ende (32) ein Gegengewicht (34) vorgesehen ist. Die Brücke (30) ist mit ihrer Schwerpunktachse (33) über ein Zentralmodul (40) kardanisch an der Schwerpunktachse (23) des Korpus (20) gelagert (Fig. 1).

## Beschreibung

Die Erfindung betrifft ein Fluggerät gemäß den Merkmalen des Oberbegriffs von Anspruch 1. Dieses weist ein Aufnahmegerät im weiteren Sinne auf. Hierzu zählen Aufzeichnungsgeräte, Kameras, Infrarotkameras, Sensoren, Mikrofone und Ähnliches. Der Begriff Aufzeichnungsgerät ist dabei weit auszulegen. Die Aufnahmegeräte können die aufgenommenen Bilder, Töne oder sonstigen Parameter intern auf einem Datenträger abspeichern oder auch direkt, vorzugsweise kabellos, beispielsweise über eine Funkfrequenz oder auch über andere übliche drahtlose Übermittlungssysteme, wie WLAN oder Bluetooth, an ein Empfangsgerät senden.

Derartige Fluggeräte finden vielfach Verwendung, beispielsweise bei Luftaufnahmen mit einer Kamera von Landschaften, Gegenständen oder auch bewegten Szenen. Wichtig ist dabei, dass das Fluggerät möglichst klein und wendig ist und dass das von einer Kamera aufgenommene Bild möglichst stabil ist und auch bei Wind oder Luftströmungen nicht verwackelt.

Aufgabe der Erfindung ist es daher, ein Fluggerät bereitzustellen, welches möglichst leicht ist und trotzdem das Aufnahmegerät stabil lagert, um beispielsweise ein stabiles Kamerabild mittels einer mitgeführten Kamera zu erzeugen. Diese Aufgabe wird erfindungsgemäß durch die kennzeichnenden Merkmale von Anspruch 1 gelöst, denen folgende besondere Bedeutung zukommt.

Das Gerüst des Fluggerätes umfasst einen Korpus mit wenigstens vier nach innen gebogenen Armen, an deren Ende je wenigstens ein Rotor, wie ein Propeller angeordnet ist. Es ist auch möglich, mehr als einen Rotor pro Arm vorzusehen. Sinnvollerweise werden an jedem Arm gleich viele Rotoren angeordnet. Des Weiteren umfasst das Gerüst eine Brücke, an deren erstem Ende eine Halterung für das Aufnahmegerät angeordnet ist, während am zweiten Ende der Brücke ein Gegengewicht vorgesehen ist. Die Brücke ist mit ihrer Schwerpunktachse über ein Zentralmodul kardanisch an der Schwerpunktachse des Korpus gelagert. Dadurch, dass die Schwerpunktachsen der Brücke und des Korpus miteinander fluchten, ist eine einfachere Ausrichtung der Brücke und damit des Aufnahmegerätes möglich. Durch die kardanische Lagerung der Brücke über das Zentralmodul kann sich der Korpus nahezu unabhängig von der Brücke bewegen, so dass die Halterung und damit das Aufnahmegerät in einer stabilen Position verbleiben. Hierbei ist es möglich, dass das Fluggerät selbst per Funk gesteuert wird; jedoch ist ausdrücklich mit umfasst, das Fluggerät bereits vorab mit einer fest eingespeicherten Flugroute zu versehen, die von dem Fluggerät abgeflogen wird. Außerdem kann auch eine Art Autopilot eingeschaltet werden, welcher sich an den Umgebungsgegebenheiten und Parametern orientiert und so eine individuelle Flugroute für das Fluggerät bestimmt.

Die vorgenannte Fähigkeit kann noch dadurch unterstützt werden, dass am Zentralmodul Ausgleichselemente, wie Servomotoren, vorgesehen sind, die Bewegungsübertragungen des Korpus auf die Brücke entgegenwirken, so dass die Brücke immer in ihrer Nullposition gehalten wird. Hierdurch ist eine gleichmäßige Aufnahme des Aufnahmegerätes, beispielsweise ein stabiles Bild einer Kamera möglich. Von außen auf die Brücke einwirkende Kräfte können so ausgeglichen werden. Sowohl Rotationsbewegungen bzw. Vibrationen, die durch die Rotorenbewegungen entstehen sowie andere Einflüsse, wie beispielsweise Luftströmungen, Winde oder Ähnliches können entsprechend ausgeglichen werden.

Um eine möglichst leichte Bauweise des Fluggerätes zu realisieren, ist es sinnvoll, das Zentralmodul so stabil auszugestalten, dass es sämtliche Belastungen, die auf den Korpus bzw. die Brücke wirken, aufnehmen kann. Hierbei sind Belastungen in Zug- und Druckrichtung sowie auch Torsionskräfte zu verstehen. Wenn der Korpus und die Brücke so ausgebildet sind, dass derartige Belastungen in Richtung des Zentralmoduls abgeleitet werden, können diese beiden Bauteile sehr leicht ausgestaltet werden, da die Belastungen über das Zentralmodul aufgenommen werden können. Dieses ist dann entsprechend stabil ausgebildet.

Bevorzugterweise besteht das Gegengewicht aus Akkumulatoren. Diese dienen als Energiequelle für die Rotoren und ggf. auch für andere Elemente, wie beispielsweise die als Ausgleichselemente dienenden Servomotoren. Es ist auch möglich, diese Akkumulatoren als Energiequelle für das Aufnahmegerät vorzusehen.

Weiterhin bevorzugt ist es, wenn das Gegengewicht von seiner Masse her anpassbar ist. Dann kann das Gegengewicht an das Gewicht des bzw. der Aufnahmegeräte angepasst werden. So kann ein einzelnes Fluggerät für verschiedene Aufnahmegeräte bzw. eine verschiedene Anzahl von Aufnahmegeräten vorgesehen sein. Um die Brücke, an der die Halterung für das bzw. die Aufnahmegeräte angeordnet ist, in ihrer Nullposition zu halten, ist es dann günstig, die Masse des Gegengewichtes anzupassen.

In einem bevorzugten Ausführungsbeispiel werden spezielle Akkumulatoren eingesetzt. Diese dienen als Gegengewicht. Um das Gesamtgewicht des Gegengewichtes anzupassen, können zusätzliche Akkumulatoren hinzugefügt oder auch einzelne Akkumulatoren wieder entfernt werden. Bei dieser speziellen Art der verwendeten Akkumulatoren bleibt die Gesamtspannung gleich, während das Gesamtgewicht des Gegengewichts veränderbar ist. So braucht nur eine Anzahl von Akkumulatoren vorgesehen sein, die dann das Gegengewicht bilden, welche für den speziellen Anwendungsfall bzw. das spezielle Aufnahmegerät angepasst werden, damit das Gegengewicht in etwa mit dem Gewicht des Aufnahmegerätes übereinstimmt.

Weiterhin ist es bevorzugt, dass die Rotoren durch die Form der Arme innerhalb der lichten Weite des Korpus angeordnet sind. Hierdurch sind die Rotoren quasi von einem Käfig, der durch die Arme gebildet wird, umgeben. Verletzungen und Unfälle sowie auch Beschädigungen an den Rotoren können so kaum geschehen. Das Fluggerät bzw. die Rotoren sind gegenüber der Umgebung gesichert, ohne an Flugfähigkeit bzw. Flugkraft einzubüßen. Außerdem ist es möglich Arme vorzusehen, die eine relative große Baulänge aufweisen, die aber durch die Krümmung trotzdem kompakt sind. Die größere Baulänge ist vorteilhaft, um Vibrationen von den Rotoren auszugleichen. Eine kompakte Bauweise ist günstig, um ein von den äußeren Abmessungen her möglichst kleines Fluggerät zu erhalten, welches wenig ist und ein geringes Gewicht aufweist.

Um die exakte Position des Aufnahmegerätes in allen drei Bewegungsrichtungen anzupassen oder auszugleichen, ist vorzugsweise im Bereich der Halterung bzw. des Aufnahmegerätes eine Ausgleichselektronik vorgesehen. Diese ermöglicht eine Ausrichtung des Aufnahmegerätes in allen drei Bewegungsrichtungen, nämlich seitlich, vorwärts, rückwärts oder auch verschwenkt. Somit kann das Aufnahmegerät für den konkreten Anwendungsfall ausgerichtet werden.

In einem weiteren Ausführungsbeispiel können noch zusätzlich Seitenpropeller vorgesehen sein, die eine Seitwärtsbewegung des Fluggerätes ermöglichen. Diese können dann an den Längsseiten und/oder an den Ecken des Korpus angeordnet sein.

Um den Korpus und/oder die Brücke möglichst leicht auszugestalten, können diese Bauteile aus einer Gitterkonstruktion bestehen. Diese hat den weiteren Vorteil, dass sie wenig Angriffsflächen für Winde oder Luftströmungen bietet, welche anderenfalls ein Fluggerät aus seiner Flugbahn bringen könnten. Besonders bevorzugt ist es, den Korpus bzw. die Brücke ganz oder teilweise aus einem Kunststoff herzustellen, da dieser besonders leicht ist.

Weiterhin vorteilhaft ist es, den Korpus und/oder die Brücke zumindest bereichsweise durch einen 3D-Drucker herzustellen. Dieser ermöglicht eine individuelle Herstellung von verschiedenen Formen und Größen. Außerdem weisen die vorgenannten Bauteile in einem bevorzugten Ausführungsbeispiel ganz oder teilweise eine organische Form auf. Derartige Formen sind besonders stabil. Unter einer organischen Form ist eine Form zu verstehen, wie sie in der Natur vorkommt, beispielsweise bei Ästen, Bäumen, Astgabelungen, Knochen, Gelenken, Spinnennetzen, Geweihen und Ähnlichem.

Eine Möglichkeit der kardanischen Lagerung der Brücke am Korpus im Zentralmodul ist ein Kugellager. Andere Formen der kardanischen Lagerung sind selbstverständlich auch möglich.

Weitere Vorteile und Ausführungsformen der Erfindung ergeben sich aus der nachfolgenden Beschreibung, den Unteransprüchen sowie den Zeichnungen. In den Zeichnungen ist das erfindungsgemäße Fluggerät in einem Ausführungsbeispiel dargestellt. Es zeigen:
- Fig. 1:: ein erfindungsgemäßes Fluggerät in Draufsicht,
- Fig. 2:: das erfindungsgemäße Fluggerät aus Fig. 1 in Seitenansicht,
- Fig. 3:: das erfindungsgemäße Fluggerät aus Fig. 1 und 2 in Vorderansicht.

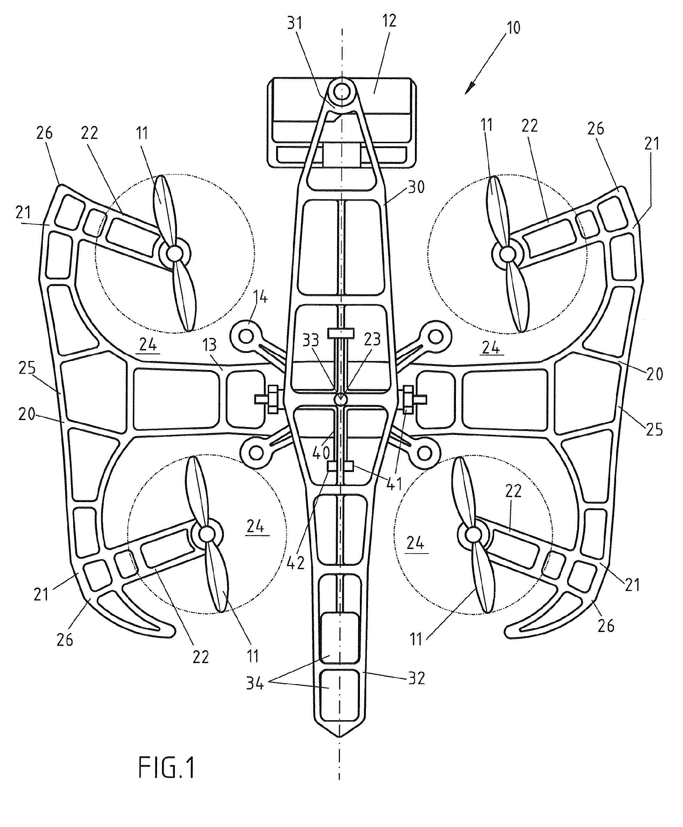

Fig. 1 zeigt ein erfindungsgemäßes Fluggerät 10 mit einem Gerüst 13. Es ist ein Korpus 20 vorgesehen, welcher vier Arme 21 aufweist, die nach innen 24 gekrümmt sind. Diese Krümmung hat einerseits den Vorteil, dass die an den Enden 22 der Arme 21 angeordneten Rotoren 11 geschützt sind, da sie in vielen Richtungen vom Gerüst 13 umgeben sind, so dass die Unfallgefahr sinkt aber auch die Gefahr von Verletzungen der Rotoren 11. Andererseits ergibt sich auch der Vorteil, dass eine relativ große Länge der Arme 21 sehr kompakt verbaut werden kann, wodurch das Fluggerät 10 in seinen äußeren Abmessungen klein gehalten werden kann. Diese Länge der Arme 21 dient dazu, Vibrationen, die durch die Bewegung der Rotoren 11 entstehen können, über die Arme 21 aufzunehmen und abzuleiten.

Sowohl die Brücke 30 als auch der Korpus 20 sind als Gitterkonstruktionen ausgebildet. Dies hat den Vorteil, dass beide Bauteile mit geringem Gewicht ausgestaltet werden können und auch wenig Angriffsfläche für Luftströmungen und Winde besitzen. Man erkennt ebenfalls, dass die Brücke 30 über ein Zentralmodul 40 am Korpus 20 angeordnet ist. Das Zentralmodul 40 weist dabei Ausgleichselemente 41 auf, die hier als Servomotoren 42 ausgebildet sind.

Des Weiteren erkennt man, dass die Brücke 30 an ihrem ersten Ende 31 eine Halterung 12 aufweist. In diese sind ein oder mehrere hier nicht dargestellte Aufnahmegeräte einbringbar. An ihrem zweiten Ende 32 weist die Brücke 30 ein Gegengewicht 34 auf. Dieses besteht vorzugsweise aus Akkumulatoren. Das Gegengewicht 34 dient dazu die Brücke 30 in Gleichgewicht zu halten, wenn die Halterung 12 mit einem oder mehreren Aufnahmegeräten bestückt ist.

Des Weiteren ist erkennbar, dass sowohl die Schwerpunktachse 23 des Korpus 20 als auch die Schwerpunktachse 33 der Brücke 30 miteinander fluchten. An diesen Schwerpunktachsen 23, 33 sind die beiden Bauteile 20, 30 über das Zentralmodul 40 miteinander verbunden, wobei die Verbindung kardanisch gelagert ist, um möglichst viele Freiheitsgrade in der Bewegung des Korpus 20 zur Brücke 30 zu ermöglichen.

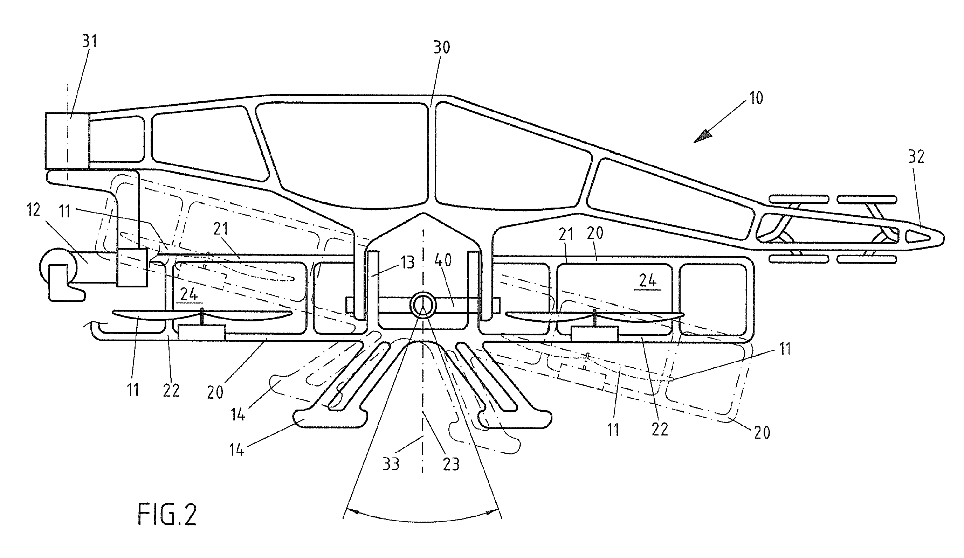

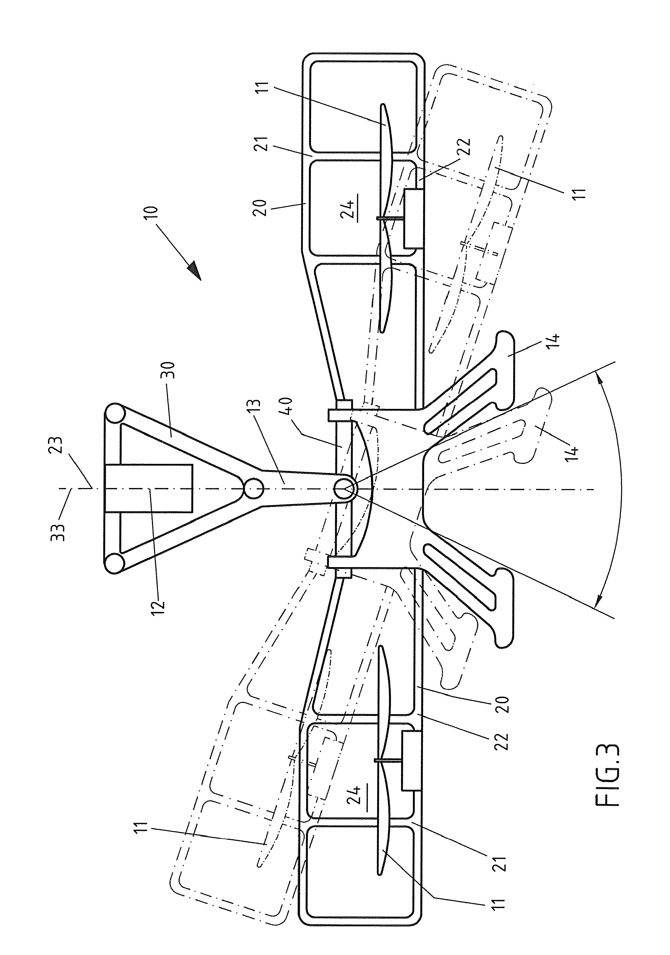

Die Fig. 2 und 3 zeigen die Funktionsweise des erfindungsgemäßen Fluggerätes 10 auch bei Durchfliegen von Luftströmungen oder Belastungen mit Winden. Man erkennt, dass bei einem Verschwenken des Korpus 20 in Pfeilrichtung, beispielsweise um Luftströmungen und Winde auszugleichen, das Zentralmodul 40 teilweise mit verschwenkt wird, der andere Teil des Zentralmoduls 40 jedoch zusammen mit der Brücke 30 in der Nullposition verbleibt. Die verschwenkte Position ist durch gestrichelte Linien dargestellt. Hierdurch ist es möglich, sehr stabile Aufnahmen, beispielsweise Bildaufnahmen mit einem Aufnahmegerät, welches in der Halterung 12 angeordnet ist, zu machen. Auch Abweichungen von Messwerten beispielsweise bei der Verwendung von Sensoren als Aufnahmegeräte, die durch eine instabile Festlegung bzw. instabile Flugeigenschaften des Fluggerätes 10 entstehen könnten, werden so vermieden.

Man erkennt weiterhin in Fig. 2, dass die Brücke 30 gebogen ausgeführt ist. Dies erhöht die Stabilität, wodurch die Brücke 30 leichter ausgeführt werden kann. Darüber hinaus erkennt man noch die Standfüße 14, auf welchen das Fluggerät 10 zum Stehen kommen kann, beispielsweise beim Start bzw. bei der Landung und selbstverständlich auch zur Bestückung der Halterung 12 mit einem Aufnahmegerät, zum Austausch bzw. zur Anpassung des Gegengewichts 34, zur Lagerung des Fluggerätes 10 oder Ähnliches.

Abschließend sei noch darauf hingewiesen, dass die hier dargestellten Ausführungsformen lediglich beispielshafte Verwirklichungen der Erfindung sind. Diese ist nicht darauf beschränkt. Es sind vielmehr noch Abänderungen und Abwandlungen möglich. Insbesondere der genaue Aufbau des Korpus, der Brücke und auch des Zentralelementes kann variieren. Die Gitterkonstruktion des Korpus und der Brücke können einen anderen Aufbau haben als den hier dargestellten. Beispielsweise kann er deutlich organisch ausgestaltet sein. Ein besonderer Vorteil der Erfindung ist neben einer guten Stabilisierung der Halterung ein sehr geringes Gewicht des Fluggerätes, so dass die verwendeten Akkumulatoren für eine längere Flugdauer ausreichend sind. Darüber hinaus kann das Fluggerät aus nahezu jedem Material hergestellt werden, um verschiedenen Umgebungsbedingungen gerecht zu werden. Schließlich ist das Gerät so klein und kompakt ausgestaltet und mit geschützten Rotoren versehen, dass in vielen Ländern kein ausdrücklicher Pilotenschein zum Betrieb des Fluggerätes erforderlich ist.

### Bezugszeichenliste:

- 10: Fluggerät
- 11: Rotor
- 12: Halterung
- 13: Gerüst
- 14: Standfuß
- 20: Korpus
- 21: Arm
- 22: Ende von 21
- 23: Schwerpunktachse von 20
- 24: Inneres von 20
- 25: Längsseite von 20
- 26: Ecke von 20
- 30: Brücke
- 31: Erstes Ende von 30
- 32: Zweites Ende von 30
- 33: Schwerpunktachse von 30
- 34: Gegengewicht
- 40: Zentralmodul
- 41: Ausgleichselement
- 42: Servomotor

## Patentansprüche

1. Fluggerät (10) zum Befördern von einem oder mehreren Aufnahmegeräten wie Aufzeichnungsgeräten, Sensoren, Kameras, Infrarotkameras, Mikrofone o.ä. durch die Luft,
mit einem oder mehreren Rotoren (11), welche die Flugbewegung steuern,
mit einer Halterung (12) für das Aufnahmegerät
und mit einem Gerüst (13), an welchem alle Elemente direkt oder indirekt anbringbar sind
**dadurch gekennzeichnet,**
**dass** das Gerüst (13) einen Korpus (20) mit wenigstens vier nach innen (24) gebogenen Armen (21) umfasst, an deren Enden (22) je wenigstens ein Rotor (11) angeordnet ist,
**dass** die Halterung (12) für das Aufnahmegerät an dem ersten Ende (31) einer Brücke (30) angeordnet ist, wobei an dem zweiten Ende (32) der Brücke (30) ein Gegengewicht (34) vorgesehen ist
und **dass** die Brücke (30) mit ihrer Schwerpunktachse (33) über ein Zentralmodul (40) kardanisch an der Schwerpunktachse (23) des Korpus (20) gelagert ist.

2. Fluggerät (10) nach Anspruch 1, **dadurch gekennzeichnet, dass** das Zentralmodul (40) über Ausgleichselemente (41) wie Servomotoren (42) verfügt, die dafür sorgen, dass die Brücke (30) immer in ihrer Nullposition gehalten wird, um eine gleichmäßige Aufnahme des Aufnahmegeräts zu ermöglichen.

3. Fluggerät (10) nach einem der Ansprüche 1 oder 2, **dadurch gekennzeichnet, dass** das Zentralmodul (40) so stabil ausgestaltet ist, dass es sämtliche Belastungen in Zug- und Druckrichtung sowie Torsionskräfte, die auf den Korpus (20) bzw. die Brücke (30) wirken, aufnehmen kann.

4. Fluggerät (10) nach einem der Ansprüche 1 bis 3, **dadurch gekennzeichnet, dass** das Gegengewicht (34) aus Akkumulatoren besteht.

5. Fluggerät (10) nach einem der Ansprüche 1 bis 4, **dadurch gekennzeichnet, dass** das Gegengewicht (34) von seiner Masse her anpassbar ist.

6. Fluggerät (10) nach den Ansprüchen 4 und 5, **dadurch gekennzeichnet, dass** Akkumulatoren zum Gegengewicht (34) hinzugefügt oder von diesem entfernt werden können, ohne die Gesamtspannung an den Akkumulatoren zu verändern, jedoch mit einer Veränderung des Gesamtgewichts des Gegengewichts (34).

7. Fluggerät (10) nach einem der Ansprüche 1 bis 6, **dadurch gekennzeichnet, dass** die Rotoren (11) durch die Form der Arme (21) innerhalb (24) der lichten Weite des Korpus (20) angeordnet sind.

8. Fluggerät (10) nach einem der Ansprüche 1 bis 7, **dadurch gekennzeichnet, dass** eine Ausgleichselektronik im Bereich des Aufnahmegerätes und/oder der Halterung (12) vorgesehen ist, um die Position des Aufnahmegerätes in allen drei Bewegungsrichtungen auszugleichen.

9. Fluggerät (10) nach einem der Ansprüche 1 bis 8, **dadurch gekennzeichnet, dass** zusätzliche Seitenpropeller vorgesehen sind, die eine Seitwärtsbewegung des Fluggeräts (10) ermöglichen und die an den Längsseiten (25) und/oder an den Ecken (26) des Korpus (20) angeordnet sind.

10. Fluggerät (10) nach einem der Ansprüche 1 bis 9, **dadurch gekennzeichnet, dass** der Korpus (20) und/oder die Brücke (30) aus einer Gitterkonstruktion, vorzugsweise ganz oder teilweise aus Kunststoff, bestehen.

11. Fluggerät (10) nach einem der Ansprüche 1 bis 10, **dadurch gekennzeichnet, dass** der Korpus (20) und/oder die Brücke (30) zumindest bereichsweise gedruckt sind und vorzugsweise ganz oder teilweise eine organische Form aufweisen.

12. Fluggerät (10) nach einem der Ansprüche 1 bis 11, **dadurch gekennzeichnet, dass** die kardanische Lagerung im Zentralmodul (40) über ein oder mehrere Kugellager erfolgt.

13. Fluggerät (10) nach einem der Ansprüche 1 bis 12, **dadurch gekennzeichnet, dass** Standfüße (14) vorgesehen sind, auf denen das Fluggerät (10) am Boden stehen kann.
